# FASCICULE DE BREVET EUROPEEN

(11) **EP 4 072 937 B1**
(45) Date de publication et mention de la délivrance du brevet: **08.11.2023**
(21) Numéro de dépôt: 20828037.0
(22) Date de dépôt: 03.12.2020
(51) Int. Cl.: B64C 11/06, F01D 7/00, F16B 21/16, F16C 33/60, F16C 35/063, F16B 21/18, F16C 19/06, F01D 25/16

(54) **PERFECTIONNEMENT AU VERROUILLAGE RADIAL D'UN PIVOT D'AUBE À ORIENTATION RÉGLABLE POUR MOYEU DE SOUFFLANTE DE TURBOMACHINE**
OPTIMIERUNG DER RADIALEN VERRIEGELUNG EINES BLATTZAPFENS MIT EINSTELLBARER NEIGUNG FÜR DIE NABE EINES TURBOMASCHINENFANS
IMPROVEMENT IN THE RADIAL LOCKING OF A BLADE PIVOT WITH ADJUSTABLE ORIENTATION FOR A TURBOMACHINE FAN HUB

(30) Priorité: 11.12.2019 FR 1914180
(43) Date de publication de la demande: 19.10.2022
(73) Titulaire: SAFRAN AIRCRAFT ENGINES, 75015 Paris (FR)
(72) Inventeur: MILLIER, Vincent, François, Georges, 77550 MOISSY-CRAMAYEL (FR); BELMONTE, Olivier, 77550 MOISSY-CRAMAYEL (FR)
(74) Mandataire: Cabinet Beau de Loménie
(86) Numéro de dépôt international: PCT/FR2020/052257
(87) Numéro de publication internationale: WO 2021/116566

(56) Documents cités:
- EP-A1- 2 555 973
- WO-A1-2006/063572
- FR-A1- 3 046 403
- GB-A- 546 621
- JP-U- S4 733 331

## Description

### Domaine Technique

La présente invention se rapporte au domaine général des turbomachines équipées d'une ou deux soufflante(s) carénée(s) ou non carénée(s), et plus particulièrement à la commande de l'orientation des aubes de soufflante(s) de ces turbomachines.

Un domaine d'application privilégié de l'invention est celui des turboréacteurs comprenant une soufflante à très fort taux de dilution (grand diamètre de soufflante) et à très faible rapport de pression.

### Technique antérieure

L'opérabilité d'un turboréacteur à très fort taux de dilution est assurée en introduisant une variabilité sur le module basse-pression du turboréacteur, cette variabilité étant activée selon les phases de vol pour restaurer une marge au pompage suffisante.

Il est connu d'assurer la variabilité par un système de changement de calage des aubes de la soufflante qui soit intégré au moyeu de la soufflante. Un tel système de changement de calage des aubes permet également d'assurer la fonction d'inversion de poussée qui n'est, avec ce type de turboréacteur, plus réalisée par la nacelle du moteur.

Par ailleurs, dans le module de soufflante d'un turboréacteur à très fort taux de dilution, la rétention radiale des aubes de soufflante est généralement assurée par la forme du pied de pale et de l'alvéole qui la reçoit, par un pivot et ses paliers à roulement pour reprendre l'ensemble des efforts auxquels l'aube est soumise, par le moyeu de la soufflante dans lequel s'intègre l'ensemble des pivots, et par le carter fan.

On pourra par exemple se référer à la publication FR 3,046,403 qui décrit un exemple d'une telle architecture de maintien des aubes de soufflante. Plus précisément, dans cette publication, la rétention radiale de chaque aube se compose d'un pivot comprenant une attache en forme de bulbe, d'un palier à roulement extérieur et d'un palier à roulement intérieur qui permettent de reprendre les efforts aérodynamiques, inertiels et centrifuges subis par l'aube et son pivot, d'un excentrique relié par des cannelures au pivot, et d'un moyeu intégrant l'ensemble des pivots.

Par ailleurs, il est généralement prévu d'assurer la rétention radiale du pivot par rapport au bloc de paliers à roulement au moyen d'un anneau de rétention segmenté. Plus précisément, il est connu de loger l'anneau de rétention dans une gorge du pivot sous la bague intérieure du palier à roulement extérieur, cette gorge étant plus large que l'anneau de rétention afin d'encaisser les dispersions de tolérance dans chacune des pièces du pivot. Une pièce annulaire vient maintenir l'anneau de rétention dans la gorge afin d'éviter son désengagement.

Une telle rétention radiale du pivot présente des inconvénients. A l'arrêt, à cause des tolérances de montage de l'anneau de rétention, tout l'ensemble du pivot « retombe » et consomme ce jeu de montage résiduel, ce qui créé de l'usure de contact sur les bagues internes des paliers à roulement.

De plus, lors de la mise en rotation du moteur, avant que la force centrifuge ne soit reprise par l'anneau de rétention, les efforts passent par d'autres chemins de propagation que ceux prévus (par exemple par les filetages), ce qui peut être critique pour les pièces impactées qui ne sont pas dimensionnées pour tenir des charges aussi importantes.

### Exposé de l'invention

La présente invention a donc pour but principal de proposer un pivot d'aube à orientation réglable qui ne présente pas les inconvénients précités notamment en supprimant tout jeu de montage résiduel.

Conformément à l'invention, ce but est atteint grâce à un pivot d'aube à orientation réglable pour moyeu de soufflante de turbomachine, comprenant :
un plot s'étendant selon un axe radial et ayant à une extrémité radiale extérieure des moyens de retenue d'un pied d'aube de soufflante et à une extrémité radiale intérieure des moyens d'accouplement pour la transmission d'un couple de torsion ;
un palier à roulement de reprise des efforts centrifuges ayant une bague interne montée en appui transversal contre une partie radiale extérieure du plot ;
un anneau de rétention radiale du plot par rapport au palier à roulement logé dans une gorge annulaire formée dans le plot ;
une pluralité de pièces de serrage montées chacune en appui transversal, c'est-à-dire selon une direction orthogonale à l'axe radial, contre l'anneau de rétention et en appui radial, c'est-à-dire selon l'axe radial, contre la bague interne du palier à roulement ; et
un écrou de serrage vissé sur un filetage externe du plot pour venir en appui conique contre les pièces de serrage de façon à ce que lesdites pièces de serrage viennent assurer un serrage de la bague interne du palier à roulement sur le plot et un serrage de l'anneau de rétention dans la gorge.

Le pivot selon l'invention est remarquable en ce qu'il prévoit une rétention radiale du plot par l'intermédiaire d'un serrage de type « clé de voûte ». Lors du serrage de l'écrou de serrage, celui-ci va entraîner les pièces de serrage qui vont glisser radialement vers l'extérieur jusqu'à arriver en contact avec la bague interne du palier à roulement. Les pièces de serrage sont ensuite contraintes de se recentrer vers l'intérieur jusqu'à venir en contact avec l'anneau de rétention logé dans la gorge du plot.

Ainsi, l'invention permet de disposer d'un système de rétention du plot par rapport au palier à roulement qui s'affranchit des jeux de montage habituels. De la sorte, les efforts (notamment centrifuges) passent toujours par le même chemin, ce qui évite à toute autre pièce de reprendre les charges importantes dues à ces efforts. Il en résulte un maintien parfait du plot, en fonctionnement comme à l'arrêt du moteur, tout en supprimant toute usure des pièces du pivot.

De préférence, l'anneau de rétention comprend une pluralité de faces planes qui viennent chacune former un contact plan/plan avec une face plane correspondante des pièces de serrage de façon à optimiser le contact entre l'anneau de rétention et les pièces de serrage.

Dans ce cas, les pièces de serrage comprennent avantageusement chacune une face tronconique opposée à leur face plane et venant en appui conique avec l'écrou de serrage.

Le pivot peut comprendre six pièces de serrage régulièrement espacées autour d'un axe radial du pivot.

De préférence également, l'anneau de rétention comprend deux segments d'anneau distincts afin de permettre son montage sur le plot.

De préférence encore, le pivot comprend en outre un système de verrouillage de l'écrou de serrage sur le plot. Ce système de verrouillage peut comprendre un anneau anti-rotation logé dans un épaulement du plot et un jonc d'arrêt monté contre l'anneau anti-rotation.

L'invention a également pour objet une aube à angle de calage variable pour moyeu de soufflante de turbomachine, comprenant un profil aérodynamique et un pivot tel que défini précédemment.

L'invention a aussi pour objet turbomachine comprenant au moins un moyeu de soufflante et au moins un ensemble d'aubes à angle de calage variable tel que défini précédemment.

L'invention a encore pour objet un procédé de montage d'un pivot tel que défini précédemment, comprenant successivement :
a- la descente du plot dans un moyeu de soufflante prémuni du palier à roulement extérieur, le plot étant prémuni de l'anneau de rétention ;
b- l'accostage des pièces de serrage en vis-à-vis de l'anneau de rétention ;
c- le vissage de l'écrou de serrage sur le filetage externe du plot ; et
d- le verrouillage de l'écrou de serrage sur le plot.

De préférence, les pièces de serrage sont préalablement solidarisées par l'intermédiaire de liens en matériau élastomère les reliant les unes aux autres, ce qui permet ensuite d'en faciliter le montage.

### Brève description des dessins

[Fig. 1] La figure 1 est une vue en coupe montrant un pivot de pale à orientation réglable selon l'invention.
[Fig. 2] La figure 2 est une vue partielle, en perspective et en écorché du pivot de la figure 1.
[Fig. 3A] La figure 3A représente une première étape d'un exemple de montage selon l'invention du pivot de la figure 1.
[Fig. 3B] La figure 3B représente une deuxième étape de l'exemple de montage du pivot de la figure 1.
[Fig. 3C] La figure 3C représente une troisième étape de l'exemple de montage du pivot de la figure 1.
[Fig. 3D] La figure 3D représente une quatrième étape de l'exemple de montage du pivot de la figure 1.
[Fig. 3E] La figure 3E représente une cinquième étape de l'exemple de montage du pivot de la figure 1.
[Fig. 4A] La figure 4A représente en vue partielle et de dessous un pivot selon une variante de réalisation de l'invention dans un état libre.
[Fig. 4B] La figure 4B représente en vue partielle et de dessous un pivot selon une variante de réalisation de l'invention dans un état assemblé.

### Description des modes de réalisation

L'invention s'applique à toute turbomachine équipée d'au moins une soufflante carénée ou non carénée, et dont les aubes de soufflante (dans le cas d'une soufflante carénée) ou les pales d'hélice (dans le cas d'une soufflante non carénée) sont équipées d'un système de calage de pas.

L'invention s'applique en particulier aux turboréacteurs du type comprenant une soufflante à très fort taux de dilution (grand diamètre de soufflante) et à très faible rapport de pression.

L'architecture de ces types de turboréacteurs est bien connue de l'homme du métier et ne sera donc pas décrite ici en détails. Brièvement, ces turboréacteurs comprennent une soufflante carénée à grand diamètre qui est munie d'un système de changement de calage de pas des aubes de la soufflante.

Un tel système de changement de calage de pas peut par exemple comprendre des bras de levier (ou excentriques) couplés à chaque pivot d'aube et actionnés en pivotement par un vérin.

De façon plus précise, le pivot de chaque aube a pour fonction d'assurer la rétention de l'aube de soufflante sur un moyeu rotatif de soufflante et le guidage de celle-ci pour le calage de son pas.

A cet effet, le pivot de chaque aube de soufflante est monté radialement dans un orifice du moyeu de la soufflante qu'il traverse de part en part, le moyeu étant centré sur l'axe longitudinal du turboréacteur.

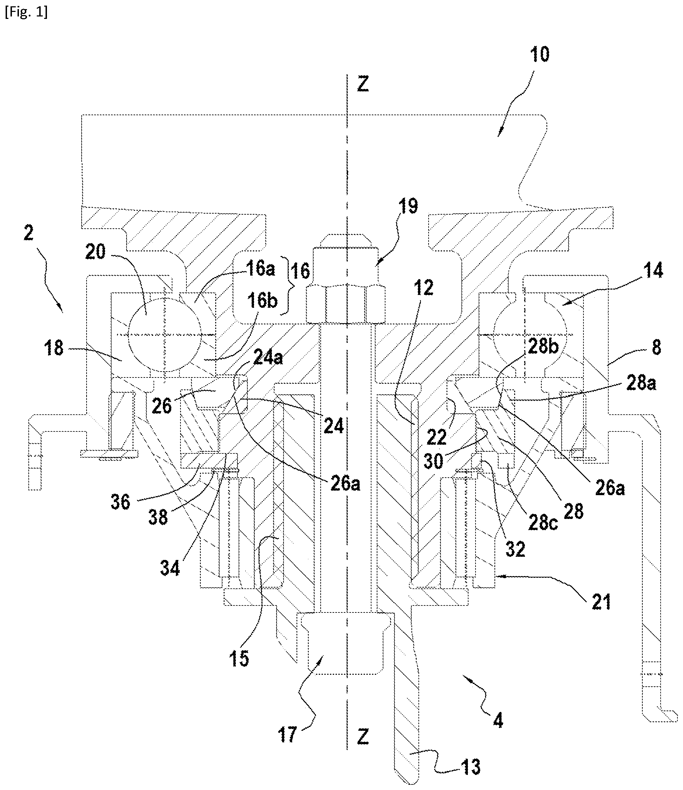

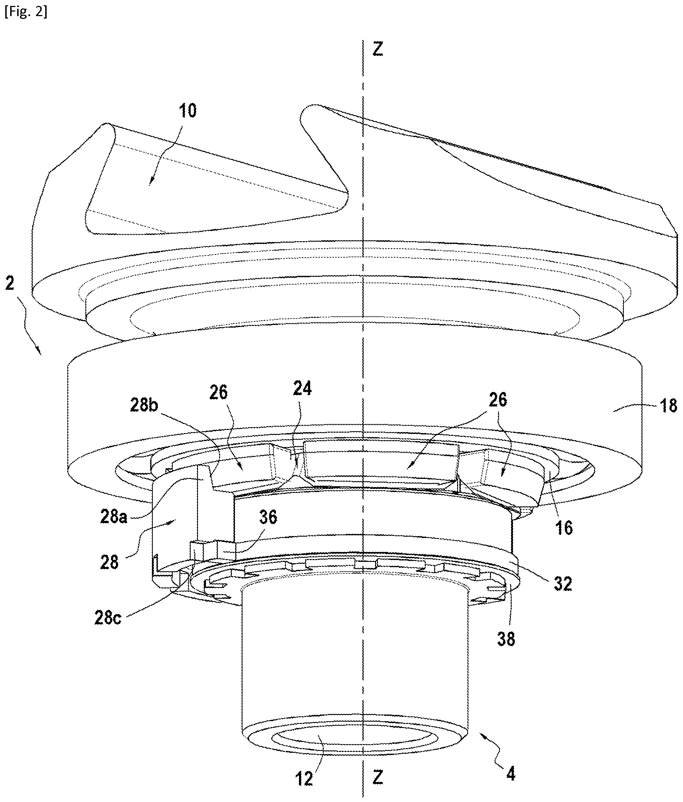

Comme représenté sur les figures 1 et 2, le pivot 2 de l'aube de soufflante selon l'invention comprend plusieurs éléments distincts qui sont assemblés entre eux de sorte à faciliter son montage/démontage du moyeu de l'hélice.

En particulier, le pivot 2 comprend un plot 4 qui s'étend selon l'axe radial Z-Z du pivot au travers d'un orifice 6 du moyeu 8 de la soufflante. Ce plot 4 présente, à une extrémité radiale extérieure (c'est-à-dire au niveau de son extrémité la plus éloignée de l'axe longitudinal du turboréacteur), une attache 10 en forme de bulbe qui est destinée à recevoir un pied (non représenté) de l'aube de soufflante. Bien entendu, d'autres moyens de retenue du pied de l'aube pourraient être envisagés.

Au niveau de son extrémité radiale intérieure (c'est-à-dire au niveau de son extrémité la plus proche de l'axe longitudinal du turboréacteur), le plot 4 comprend un orifice 12 centré sur l'axe radial Z-Z et destiné à recevoir une bague de transmission de calage 13 pour transmettre le couple de torsion au pivot de l'aube pour changer son pas de calage.

La bague de transmission de calage 13 est couplée à l'orifice 12 par l'intermédiaire de cannelures 15. Cette bague de transmission de calage 13 est destinée à transmettre le couple de torsion au pivot de l'aube pour changer son pas de calage. Elle est verrouillée sur le plot par l'intermédiaire d'une vis 17 centrée sur l'axe radial Z-Z et d'un écrou 19 serré sur ladite vis.

Le pivot selon l'invention comprend encore un palier à roulement pour la reprise des efforts centrifuges (c'est-à-dire selon l'axe radial Z-Z) vus par l'aube et son pivot.

Plus précisément, le pivot selon l'invention comprend un palier à roulement extérieur 14 pour la reprise des efforts centrifuges. Ce palier à roulement est à billes. Il est muni d'une bague interne 16 qui est montée en appui transversal contre l'extrémité radiale extérieure du plot 4.

De préférence, la bague interne 16 est formée de deux parties distinctes 16a, 16b. Cette caractéristique permet de faciliter le montage du pivot comme il sera détaillé ultérieurement.

Le palier à roulement extérieur 14 comprend également une bague externe 18 qui est montée en appui transversal à l'intérieur de l'orifice 6 du moyeu 8 de la soufflante, les bagues interne 16 et externe 18 définissant des pistes de roulement pour une pluralité de billes 20.

Pour reprendre les efforts transversaux, le pivot peut comprendre un palier à roulement à aiguilles ou à rouleaux 21 qui est décalé radialement vers l'intérieur par rapport au palier à roulement extérieur 14.

Le pivot selon l'invention comprend également des moyens de rétention radiale du plot 4 par rapport au bloc que forme le palier à roulement extérieur 14.

A cet effet, le plot 4 comprend, au niveau de sa surface extérieure, une gorge annulaire 22 positionnée en dessous de la bague interne 16 du palier à roulement extérieur 14.

Un anneau de rétention 24 est logé dans cette gorge 22. Cet anneau de rétention est de préférence réalisé en deux segments d'anneau distincts afin de faciliter son montage.

De plus, une pluralité de pièces de serrage 26 sont montées chacune en appui transversal contre l'anneau de rétention 24 et en appui radial contre la bague interne 16 du palier à roulement extérieur. Les pièces de serrage 26 sont par exemple au nombre de six et sont de préférence régulièrement espacées autour de l'axe radial Z-Z.

L'appui transversal entre l'anneau de rétention 24 et les pièces de serrage 26 est de préférence réalisés au moyen de contacts « plan/plan » selon une direction orthogonale à l'axe radial Z-Z. A cet effet, l'anneau de rétention 24 comprend autant de faces planes 24a qu'il y a de pièces de serrage 26, ces faces planes 24a étant en contact avec des faces planes 26a correspondantes des pièces de serrage.

L'appui radial entre l'anneau de rétention 24 et la bague interne 16 du palier à roulement extérieur est également réalisé au moyen d'un contact « plan/plan », cette fois-ci selon la direction de l'axial radial Z-Z.

Les moyens de rétention radiale du plot comprennent aussi un écrou de serrage 28 qui est vissé sur un filetage externe 30 du plot 4 positionné en-dessous de la gorge 22 recevant l'anneau de rétention 24.

Cet écrou de serrage 28 comprend un épaulement annulaire 28a muni à l'intérieur d'une face tronconique 28b venant en contact avec une face tronconique correspondante 26b des pièces de serrage (la face tronconique 26b des pièces de serrage est opposée à leur face plane 26a) pour réaliser un appui conique.

Ainsi, lors du vissage de l'écrou de serrage 28, l'épaulement 28a de celui-ci va venir en appui conique contre les pièces de serrage 26. Du fait de cet appui conique, les pièces de serrage vont avoir tendance à glisser radialement vers l'extérieur pour venir en appui radial contre la bague interne 16 du palier à roulement extérieur. De plus, les pièces de serrage vont également avoir tendance à se recentrer vers l'axe radial Z-Z, de sorte à venir en appui transversal contre l'anneau de rétention 24.

De la sorte, le vissage de l'écrou de serrage entraîne un serrage de la bague interne 16 du palier à roulement extérieur sur le plot 4 et un serrage de l'anneau de rétention 24 dans la gorge du plot. Tout jeu de montage peut donc être supprimé.

De façon avantageuse, le pivot selon l'invention comprend en outre un système de verrouillage de l'écrou de serrage 28 sur le plot 4.

Comme représenté sur les figures 1 et 2, ce système de verrouillage peut comprendre un anneau anti-rotation 32 qui est logé dans un épaulement 34 du plot prévu à cet effet.

L'anneau anti-rotation 32 est muni d'au moins un doigt 36 qui vient se loger dans une encoche 28c de l'écrou de serrage 28 pour l'empêcher de pivoter autour de l'axe radial Z-Z. Un jonc d'arrêt 38 (type « circlips ») est monté radialement sous l'anneau anti-rotation pour maintenir ce dernier en position dans l'épaulement 34 du plot.

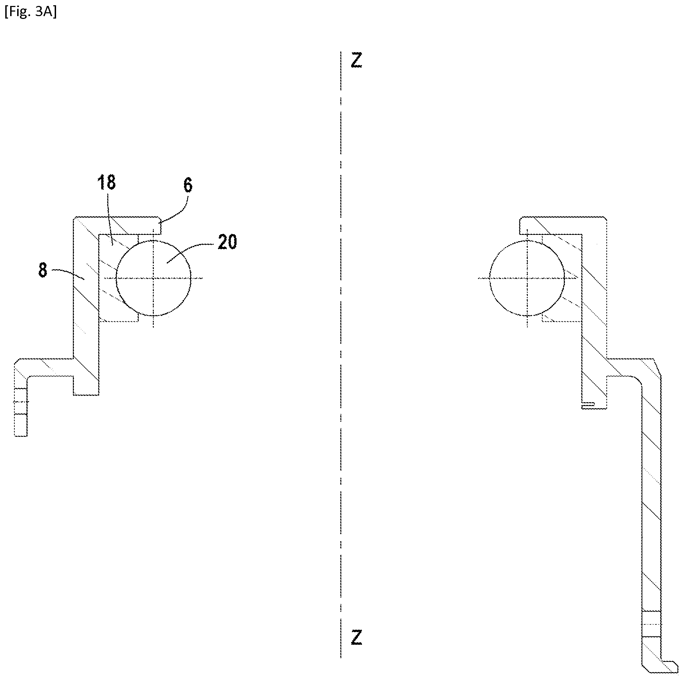

En liaison avec les figures 3A à 3E, on décrira maintenant un exemple de montage du pivot selon l'invention.

Au cours d'une première étape illustrée par la figure 3A, la bague externe 18 du palier à roulement extérieur est montée en appui transversal à l'intérieur de l'orifice 6 du moyeu 8 de la soufflante (elle est par exemple frettée), puis les billes 20 de ce palier à roulement sont montées.

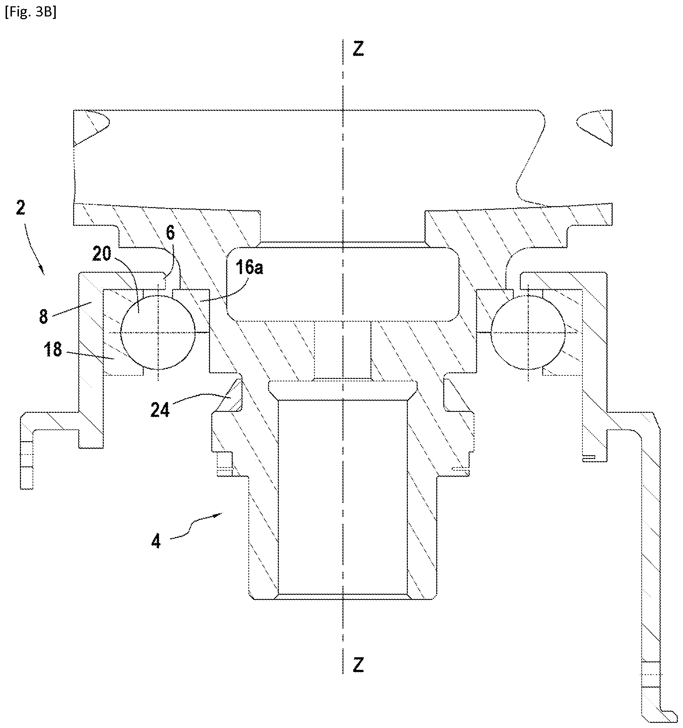

Comme représenté sur la figure 3B, le plot 4 est alors descendu radialement dans l'orifice 6 du moyeu 8, le plot étant préalablement prémuni d'une partie 16a de la bague interne du palier à roulement extérieur et de l'anneau de rétention 24.

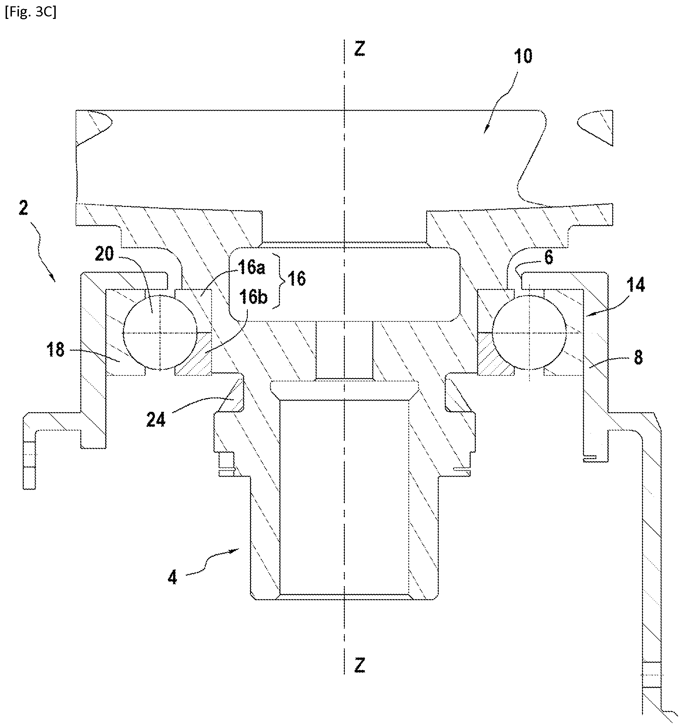

L'autre partie 16b de la bague interne du palier à roulement extérieur 14 est ensuite montée pour former la bague interne 16 (figure 3C).

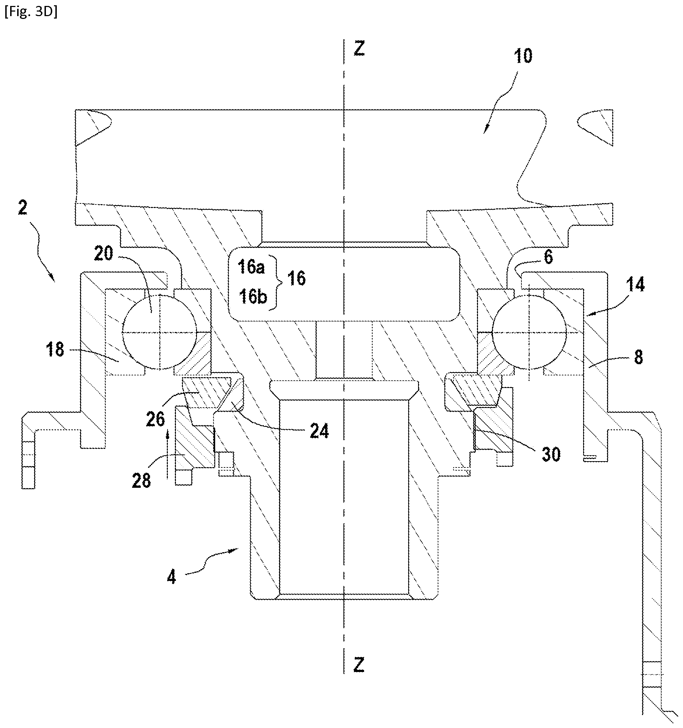

Au cours de l'étape suivante, le système de rétention radiale du plot est assemblé. Dans un premier temps, les pièces de serrage 26 sont accostées en vis-à-vis de l'anneau de rétention 24 et l'écrou de serrage 28 est vissé sur le filetage 30 du plot 4 (figures 3D).

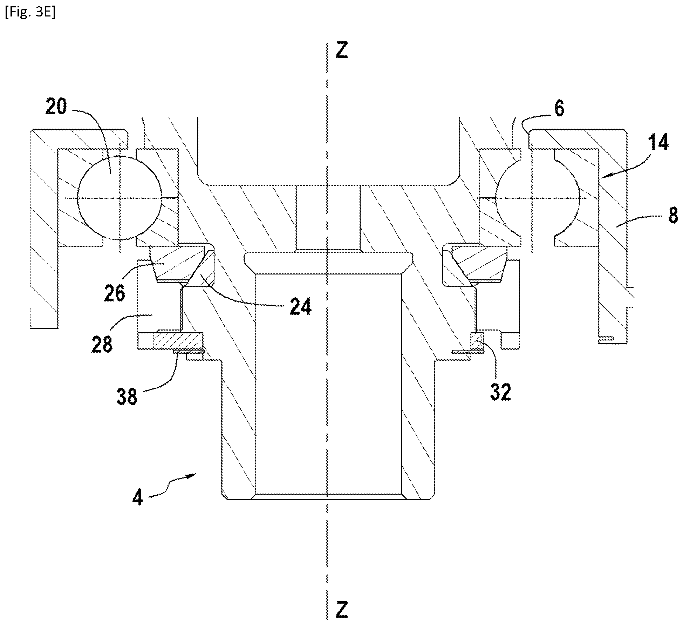

Enfin, l'ensemble est verrouillé sur le plot en montant l'anneau anti-rotation 32 sur le plot, ce dernier étant lui-même maintenu en place à l'aide du jonc d'arrêt 38 (figure 3E).

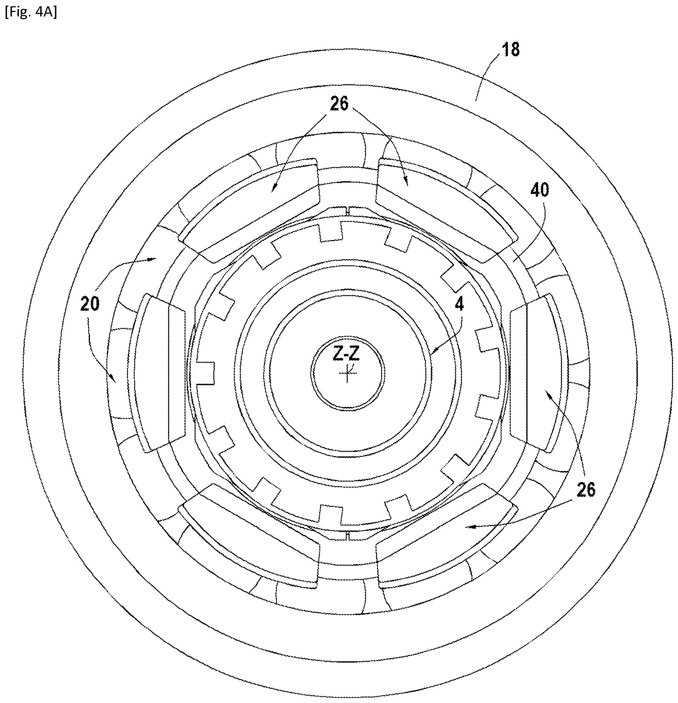

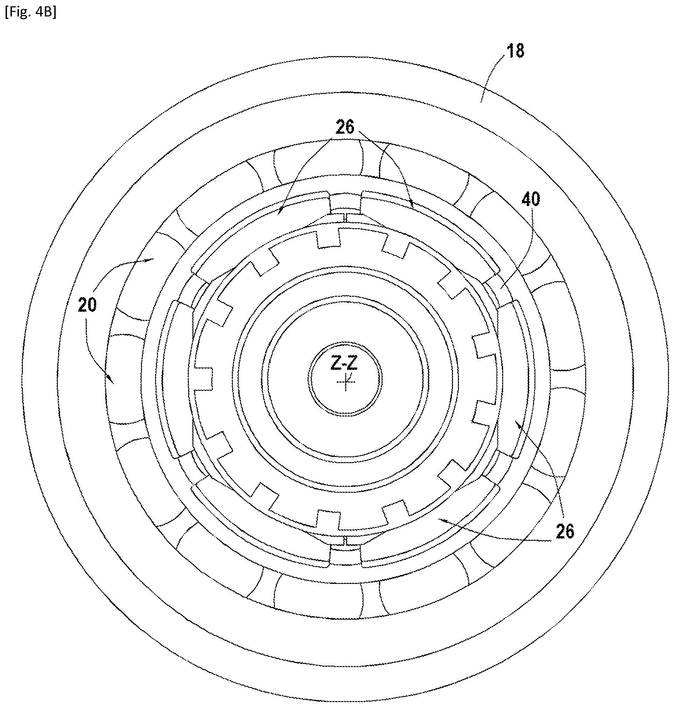

En liaison avec les figures 4A et 4B, on décrira maintenant une variante de réalisation du pivot selon l'invention dans laquelle les pièces de serrage 26 sont solidarisées les unes aux autres par l'intermédiaire de liens en matériau élastomère 40 les reliant les unes aux autres.

La figure 4A représente plus précisément un mode de réalisation de ces liens en matériau élastomère 40 lorsque le moteur est à l'arrêt (état libre). Lors du serrage de l'écrou de serrage, les liens en matériau élastomère 40 viennent s'écraser vers l'intérieur du pivot (état assemblé - figure 4B).

Dans une variante de réalisation, il est possible d'envisager de réaliser ces moyens de solidarisation des pièces de serrage par fabrication additive en remplaçant les liens par des supports déformables.

## Revendications

1. Pivot (2) d'aube à orientation réglable pour moyeu de soufflante de turbomachine, comprenant :
un plot (4) s'étendant selon un axe radial (Z-Z) et ayant à une extrémité radiale extérieure des moyens de retenue (10) d'un pied d'aube de soufflante et à une extrémité radiale intérieure des moyens d'accouplement pour la transmission d'un couple de torsion ;
un palier à roulement (14) de reprise des efforts centrifuges ayant une bague interne (16) montée en appui transversal contre une partie radiale extérieure du plot ;
un anneau de rétention (24) radiale du plot par rapport au palier à roulement (14) logé dans une gorge annulaire (22) formée dans le plot ;
une pluralité de pièces de serrage (26) montées chacune en appui transversal, c'est-à-dire selon une direction orthogonale à l'axe radial (Z-Z), contre l'anneau de rétention (24) et en appui radial, c'est-à-dire selon l'axe radial (Z-Z), contre la bague interne (16) du palier à roulement ; et
un écrou de serrage (28) vissé sur un filetage externe (30) du plot pour venir en appui conique contre les pièces de serrage de façon à ce que lesdites pièces de serrage viennent assurer un serrage de la bague interne du palier à roulement sur le plot et un serrage de l'anneau de rétention dans la gorge.

2. Pivot selon la revendication 1, dans lequel l'anneau de rétention (24) comprend une pluralité de faces planes (24a) qui viennent chacune former un contact plan/plan avec une face plane (26a) correspondante des pièces de serrage (26).

3. Pivot selon la revendication 2, dans lequel les pièces de serrage (26) comprennent chacune une face tronconique (26b) opposée à leur face plane (26a) et venant en appui conique avec l'écrou de serrage (28).

4. Pivot selon l'une quelconque des revendications 1 à 3, comprenant six pièces de serrage (26) régulièrement espacées autour d'un axe radial (Z-Z) du pivot.

5. Pivot selon l'une quelconque des revendications 1 à 4, dans lequel l'anneau de rétention (24) comprend deux segments d'anneau distincts afin de permettre son montage sur le plot.

6. Pivot selon l'une quelconque des revendications 1 à 5, comprenant en outre un système de verrouillage de l'écrou de serrage sur le plot.

7. Pivot selon la revendication 6, dans lequel le système de verrouillage comprend un anneau anti-rotation (32) logé dans un épaulement (34) du plot et un jonc d'arrêt (38) monté contre l'anneau anti-rotation.

8. Aube à angle de calage variable pour moyeu de soufflante de turbomachine, comprenant un profil aérodynamique et un pivot (2) selon l'une quelconque des revendications 1 à 7.

9. Turbomachine comprenant au moins un moyeu (8) de soufflante et au moins un ensemble d'aubes à angle de calage variable selon la revendication 8.

10. Procédé de montage d'un pivot selon l'une quelconque des revendications 1 à 7, comprenant successivement :
a- la descente du plot (4) dans un moyeu (8) de soufflante prémuni du palier à roulement (14), le plot étant prémuni de l'anneau de rétention (24) ;
b- l'accostage des pièces de serrage (26) en vis-à-vis de l'anneau de rétention ;
c- le vissage de l'écrou de serrage (28) sur le filetage externe (30) du plot ; et
d- le verrouillage de l'écrou de serrage sur le plot.

11. Procédé selon la revendication 10, dans lequel les pièces de serrage (26) sont préalablement solidarisées par l'intermédiaire de liens en matériau élastomère (40) les reliant les unes aux autres.

## Patentansprüche

1. Drehzapfen (2) für eine Schaufel mit einstellbarer Ausrichtung für die Nabe eines Gebläses einer Turbomaschine, umfassend:
einen Klotz (4), der sich entlang einer radialen Achse (Z-Z) erstreckt und an einem radial äußeren Ende Haltemittel (10) für einen Fuß einer Gebläseschaufel und an einem radial inneren Ende Kupplungsmittel für die Übertragung eines Torsionsmoments aufweist,
ein Wälzlager (14) zur Aufnahme von Zentrifugalkräften, das einen Innenring (16) aufweist, der quer gegen einen radial äußeren Teil des Klotzes anliegend montiert ist,
einen radialen Haltering (24) für den Klotz in Bezug auf das Wälzlager (14), der in einer ringförmigen Nut (22) aufgenommen ist, die in dem Klotz ausgebildet ist,
mehrere Klemmstücke (26), die jeweils quer, d. h., in einer Richtung orthogonal zur radialen Achse (Z-Z), gegen den Haltering (24) anliegend und radial, d. h., in Richtung der radialen Achse (Z-Z), gegen den Innenring (16) des Wälzlagers anliegend montiert sind, und
eine Klemmmutter (28), die auf ein Außengewinde (30) des Klotzes geschraubt ist, um konisch gegen die Klemmstücke anzuliegen, so dass die Klemmstücke eine Klemmung des Innenrings des Wälzlagers auf dem Klotz und eine Klemmung des Halterings in der Nut sicherstellen.

2. Drehzapfen nach Anspruch 1, wobei der Haltering (24) mehrere ebene Seitenflächen (24a) umfasst, die jeweils mit einer entsprechenden ebenen Seitenfläche (26a) der Klemmstücke (26) einen Kontakt von Fläche zu Fläche ausbilden.

3. Drehzapfen nach Anspruch 2, wobei die Klemmstücke (26) jeweils eine kegelstumpfförmige Seitenfläche (26b) umfassen, die ihrer ebenen Seitenfläche (26a) gegenüberliegt und konisch gegen die Klemmmutter (28) zur Anlage kommt.

4. Drehzapfen nach einem der Ansprüche 1 bis 3, umfassend sechs Klemmstücke (26), die regelmäßig um eine radiale Achse (Z-Z) des Drehzapfens herum beabstandet sind.

5. Drehzapfen nach einem der Ansprüche 1 bis 4, wobei der Haltering (24) zwei unterschiedliche Ringsegmente umfasst, um seine Montage auf dem Klotz zu erlauben.

6. Drehzapfen nach einem der Ansprüche 1 bis 5, ferner umfassend ein Verriegelungssystem für die Klemmmutter auf dem Klotz.

7. Drehzapfen nach Anspruch 6, wobei das Verriegelungssystem einen Verdrehsicherungsring (32) umfasst, der in einer Schulter (34) des Klotzes aufgenommen ist, sowie einen Sprengring (38), der gegen den Verdrehsicherungsring montiert ist.

8. Schaufel mit variablem Anstellwinkel für die Nabe eines Gebläses einer Turbomaschine, umfassend ein aerodynamisches Profil und einen Drehzapfen (2) nach einem der Ansprüche 1 bis 7.

9. Turbomaschine, umfassend zumindest eine Nabe (8) eines Gebläses und zumindest eine Anordnung von Schaufeln mit variablem Anstellwinkel nach Anspruch 8.

10. Verfahren zur Montage eines Drehzapfens nach einem der Ansprüche 1 bis 7, der Reihe nach umfassend:
a- das Absenken des Klotzes (4) in eine Nabe (8) eines Gebläses, die vorab mit dem Wälzlager (14) versehen worden ist, wobei der Klotz vorab mit dem Haltering (24) versehen worden ist,
b- das Anlegen der Klemmstücke (26) dem Haltering gegenüberliegend,
c- das Aufschrauben der Klemmmutter (28) auf das Außengewinde (30) des Klotzes, und
d- das Verriegeln der Klemmmutter auf dem Klotz.

11. Verfahren nach Anspruch 10, bei dem die Klemmstücke (26) zuvor mittels Verbindungen aus Elastomermaterial (40), die sie miteinander verbinden, fest miteinander verbunden werden.

## Claims

1. A blade pivot (2) with adjustable orientation for a turbomachine fan hub, comprising:
a stud (4) extending along a radial axis (Z-Z) and having, at an external radial end, means for retaining (10) a fan blade root and, at an internal radial end, coupling means for the transmission of a torsional torque;
a rolling bearing (14) for absorbing the centrifugal forces having an inner bushing (16) mounted in transverse abutment against an external radial portion of the stud;
a ring for radially retaining (24) the stud relative to the rolling bearing (14) housed in an annular groove (22) formed in the stud;
a plurality of clamping parts (26) each mounted in transverse abutment, that is to say along a direction orthogonal to the radial axis (Z-Z), against the retaining ring (24) and in radial abutment, that is to say along the radial axis (Z-Z), against the inner bushing (16) of the rolling bearing; and
a clamping nut (28) screwed onto an outer thread (30) of the stud to come into conical abutment against the clamping parts such that said clamping parts ensure a clamping of the inner bushing of the rolling bearing on the stud and a clamping of the retaining ring in the groove.

2. The pivot according to claim 1, wherein the retaining ring (24) comprises a plurality of planar faces (24a) which each form a planar/planar contact with a corresponding planar face (26a) of the clamping parts (26).

3. The pivot according to claim 2, wherein the clamping parts (26) each comprise a frustoconical face (26b) opposite to their planar face (26a) and coming into conical abutment with the clamping nut (28).

4. The pivot according to any one of claims 1 to 3, comprising six clamping parts (26) evenly spaced about a radial axis (Z-Z) of the pivot.

5. The pivot according to any one of claims 1 to 4, wherein the retaining ring (24) comprises two distinct ring segments in order to allow its mounting on the stud.

6. The pivot according to any one of claims 1 to 5, further comprising a system for locking the clamping nut on the stud.

7. The pivot according to claim 6, wherein the locking system comprises an anti-rotation ring (32) housed in a shoulder (34) of the stud and a circlip (38) mounted against the anti-rotation ring.

8. A blade with variable setting angle for a turbomachine fan hub, comprising an airfoil and a pivot (2) according to any one of claims 1 to 7.

9. A turbomachine comprising at least one fan hub (8) and at least one set of blades with variable setting angle according to claim 8.

10. A method for mounting a pivot according to any one of claims 1 to 7, comprising successively:
a- the lowering of the stud (4) in a fan hub (8) previously provided with the rolling bearing (14), the stud being previously provided with the retaining ring (24);
b- the positioning of the clamping parts (26) opposite the retaining ring;
c- the screwing of the clamping nut (28) on the outer thread (30) of the stud; and
d- the locking of the clamping nut on the stud.

11. The method according to claim 10, wherein the clamping parts (26) are secured beforehand by means of links made of elastomeric material (40) linking them to each other.
